(19) Europäisches Patentamt
European Patent Office
Office européen des brevets

(11) EP 3 849 822 B1

(12) **FASCICULE DE BREVET EUROPEEN**

(45) Date de publication et mention de la délivrance du brevet:
**07.09.2022 Bulletin 2022/36**

(21) Numéro de dépôt: **19786647.8**

(22) Date de dépôt: **11.09.2019**

(51) Classification Internationale des Brevets (IPC):
***B60C 1/00*** (2006.01) ***C08F 210/02*** (2006.01)
***C08K 3/04*** (2006.01) ***C08K 3/06*** (2006.01)

(52) Classification Coopérative des Brevets (CPC):
(C-Sets disponibles)
**C08F 210/02; B60C 1/0016; C08K 3/04; C08K 3/06;** C08K 3/36 (Cont.)

(86) Numéro de dépôt international:
**PCT/FR2019/052097**

(87) Numéro de publication internationale:
**WO 2020/053520 (19.03.2020 Gazette 2020/12)**

(54) **PNEUMATIQUE**

REIFEN

TYRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.09.2018 FR 1858135**

(43) Date de publication de la demande:
**21.07.2021 Bulletin 2021/29**

(73) Titulaire: **COMPAGNIE GENERALE DES ETABLISSEMENTS MICHELIN**
**63000 Clermont-Ferrand (FR)**

(72) Inventeurs:
- **ARAUJO DA SILVA, José-Carlos**
  **63040 CLERMONT-FERRAND Cedex 9 (FR)**
- **CROCHET, Aurore**
  **63040 CLERMONT-FERRAND Cedex 9 (FR)**
- **TRIGUEL, Aurélie**
  **63040 CLERMONT-FERRAND Cedex 9 (FR)**
- **LEMERLE, Frédéric**
  **63040 CLERMONT-FERRAND Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**WO-A1-2017/103544**
**WO-A1-2018/109397**
**FR-A1- 3 023 844**
**JP-A- 2013 155 257**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



**(Cont. page suivante)**

(52) Classification Coopérative des Brevets (CPC):
(Cont.)

C-Sets
**C08F 210/02, C08F 4/52;**
**C08F 210/02, C08F 236/06;**
**C08K 3/04, C08L 23/0807;**
**C08K 3/04, C08L 23/0823;**
**C08K 3/06, C08L 23/0807;**
**C08K 3/06, C08L 23/0823**

## Description

Le domaine de la présente invention est celui des pneumatiques dont la bande de roulement est constituée tout ou partie d'une composition de caoutchouc riche en élastomère diénique fortement saturé.

Il est connu d'utiliser dans des compositions de caoutchouc pour pneumatique des copolymères présentant une sensibilité moindre à l'oxydation, comme par exemple les élastomères diéniques fortement saturés, élastomères comprenant des unités éthylène à un taux molaire supérieur à 50% en mole des unités monomère de l'élastomère. On peut citer par exemple les copolymères d'éthylène et de 1,3-diène qui contiennent plus de 50% en mole d'éthylène, en particulier les copolymères d'éthylène et de 1,3-butadiène. L'utilisation de tels copolymères d'éthylène et de 1,3-butadiène dans une bande de roulement d'un pneumatique est par exemple décrite dans le document WO 2014114607 A1 et a pour effet de conférer au pneumatique un compromis amélioré de performance entre la résistance au roulement et la résistance à l'usure.

Il est également connu d'utiliser de tels copolymères dans les bandes de roulement de pneumatique pour avion pour augmenter la résistance à l'usure à haute vitesse, comme cela est par exemple décrit dans le document WO 2016012259 A1.

Il est également important de disposer de pneumatiques dont la bande de roulement présente une bonne cohésion. En effet, au cours du roulage, une bande de roulement subit des sollicitations mécaniques et des agressions résultant du contact direct avec le sol. Ceci a pour conséquence que des amorces de fissures se créent. Au cours de leur propagation en surface ou à l'intérieur de la bande de roulement, les amorces de fissure peuvent entraîner la rupture du matériau qui constitue la bande de roulement. Cet endommagement de la bande de roulement réduit la durée de vie de la bande de roulement du pneumatique. Les sollicitations mécaniques et les agressions subies par le pneumatique étant amplifiées sous l'effet du poids porté par le pneumatique, une bonne cohésion est tout particulièrement recherchée dans le cas d'un pneumatique monté sur un véhicule portant de lourdes charges.

Il existe donc toujours une préoccupation d'améliorer encore davantage la performance d'un pneumatique, notamment d'améliorer la cohésion de sa bande de roulement constituée tout ou partie d'une composition de caoutchouc qui contient très majoritairement un copolymère d'éthylène et d'un 1,3-diène lui-même très riche en éthylène.

La Demanderesse a trouvé un pneumatique qui permet de répondre à cette préoccupation.

Ainsi, un premier objet de l'invention est un pneumatique qui comprend une bande de roulement dont la portion destinée à être au contact avec le sol de roulage est constituée tout ou partie d'une composition de caoutchouc à base au moins d'un élastomère diénique fortement saturé, d'une charge renforçante qui comprend un noir de carbone et d'un système de vulcanisation comprenant du soufre et un accélérateur de vulcanisation,

- l'élastomère diénique fortement saturé étant un copolymère d'éthylène et d'un 1,3-diène contenant des unités éthylène qui représentent au moins 70% en mole des unités monomères du copolymère,
- le taux de l'élastomère diénique fortement saturé dans la composition de caoutchouc étant d'au moins 80 pce,
- le noir de carbone dans la composition de caoutchouc représentant plus de 60% en masse de la charge renforçante,
- le taux de noir de carbone dans la composition de caoutchouc étant entre 25 pce et 55 pce,
- le taux de soufre dans la composition de caoutchouc étant inférieur à 1 pce,
- le rapport massique entre le taux de soufre et la quantité de l'accélérateur de vulcanisation dans la composition de caoutchouc étant inférieur à 1,
- l'accélérateur de vulcanisation étant un accélérateur primaire ou un mélange d'un accélérateur primaire et d'un accélérateur secondaire,
- le rapport massique étant calculé à partir des taux et quantité exprimés en pce.

## I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b). L'abréviation "pce" signifie parties en poids pour cent parties d'élastomère (du total des élastomères si plusieurs élastomères sont présents).

Dans la présente demande, les rapports massiques et les ratios massiques entre divers constituants de la composition de caoutchouc sont calculés à partir des taux ou quantités des constituants exprimés en pce.

Par l'expression composition "à base de", il faut entendre dans la présente description une composition comportant le mélange et/ou le produit de réaction in situ des différents constituants utilisés, certains de ces constituants de base (par exemple l'élastomère, la charge ou les constituants du système de vulcanisation ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée

à la fabrication de pneumatique.

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

L'élastomère utile aux besoins de l'invention est un élastomère diénique fortement saturé, de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. L'élastomère diénique fortement saturé est très riche en unité éthylène, puisque les unités éthylène représentent au moins 70% en mole de l'ensemble des unités monomères de l'élastomère.

De préférence, l'élastomère diénique fortement saturé comprend de 75% à moins de 95% molaire d'unité éthylène. Autrement dit, les unités éthylène représentent préférentiellement de 75% à moins de 95% en mole de l'ensemble des unités monomères de l'élastomère diénique fortement saturé. De manière plus préférentielle, l'élastomère diénique fortement saturé comprend entre 75% et 90% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène.

Selon un premier mode de réalisation de l'invention, l'élastomère diénique fortement saturé contient des unités de formule (I). La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance.

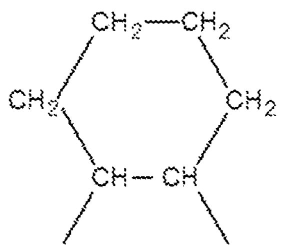

(I)

Selon un deuxième mode de réalisation de l'invention, l'élastomère diénique fortement saturé contient des unités de formule (II).

$$-CH_2-CH(CH=CH_2)- \qquad (II)$$

Selon un troisième mode de réalisation de l'invention, l'élastomère diénique fortement saturé contient des unités de formule (I) et de formule (II).

Selon un quatrième mode de réalisation de l'invention, l'élastomère diénique fortement saturé est dépourvu d'unités de formule (I). Selon ce quatrième mode de réalisation, le copolymère d'éthylène et d'un 1,3-diène contient de préférence des unités de formule (II).

Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé. Ces plages de valeurs préférentielles de o et p peuvent s'appliquer à l'un quelconque des modes de réalisation de l'invention que sont le premier mode de réalisation, le deuxième mode de réalisation, le troisième mode de réalisation et le quatrième mode de réalisation, y compris leurs variantes préférentielles.

$$0 < o+p \leq 25 \qquad \text{(eq. 1)}$$

$$0 < o+p < 20 \qquad \text{(eq. 2)}$$

Selon le premier mode de réalisation, selon le deuxième mode de réalisation de l'invention, selon le troisième mode de réalisation et selon le quatrième mode de réalisation, y compris leurs variantes préférentielles, l'élastomère diénique fortement saturé est préférentiellement un copolymère statistique.

L'élastomère diénique fortement saturé utile aux besoins de l'invention, en particulier défini selon le premier mode de réalisation, selon le deuxième mode de réalisation, selon le troisième mode de réalisation et selon la quatrième mode de réalisation, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

L'élastomère diénique fortement saturé utile aux besoins de l'invention peut être constitué d'un mélange d'élastomères diéniques fortement saturés qui se différencient les uns des autres par leurs microstructures ou par leurs macrostructures.

Dans l'élastomère diénique fortement saturé défini selon le premier mode de réalisation de l'invention, selon le deuxième mode de réalisation de l'invention, selon le troisième mode de réalisation et selon le quatrième mode de réalisation, le 1,3-diène est de préférence le 1,3-butadiène, auquel cas l'élastomère diénique fortement saturé est un copolymère d'éthylène et de 1,3-butadiène, de préférence statistique.

Selon l'invention, le taux de l'élastomère diénique fortement saturé dans la composition de caoutchouc est d'au moins 80 parties en poids pour cent parties d'élastomère de la composition de caoutchouc (pce). De préférence, le taux de l'élastomère diénique fortement saturé dans la composition de caoutchouc varie dans un domaine allant de 80 à 100 pce. De manière plus préférentielle, il varie dans un domaine allant de 90 à 100 pce.

Le système de vulcanisation utile aux besoins de l'invention a pour caractéristique essentielle de comprendre du soufre et un accélérateur de vulcanisation. Par définition, le taux de soufre et la quantité de l'accélérateur de vulcanisation dans le système de vulcanisation sont strictement supérieurs à 0 pce. Avantageusement, le taux de soufre dans la composition de caoutchouc définie à l'une quelconque des revendications 1 à 15 est supérieur à 0.3 pce. Avantageusement, la quantité de l'accélérateur de vulcanisation dans la composition de caoutchouc définie à l'une quelconque des revendications 1 à 15, qu'il soit un accélérateur primaire ou un mélange d'un accélérateur primaire et d'un accélérateur secondaire, est d'au moins 0.5 pce.

Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Selon l'invention, le soufre est utilisé dans la composition de caoutchouc à un taux inférieur à 1 pce et le rapport massique entre le taux de soufre et la quantité de l'accélérateur de vulcanisation dans la composition de caoutchouc est inférieur à 1. Cette double condition portant sur le taux de soufre et sur le rapport massique entre le taux de soufre et la quantité de l'accélérateur de vulcanisation combinée à l'utilisation très majoritaire d'un élastomère diénique fortement saturé dans une composition de caoutchouc renforcée majoritairement par du noir de carbone permet d'améliorer significativement la cohésion de la composition de caoutchouc entrant dans la portion de la bande de roulement, portion destinée à être au contact avec le sol de roulage.

Selon une première alternative, l'accélérateur de vulcanisation est un accélérateur primaire, auquel cas l'accélérateur primaire constitue le seul accélérateur de la composition de caoutchouc. Selon une deuxième alternative, l'accélérateur de vulcanisation est un mélange d'un accélérateur primaire et d'un accélérateur secondaire, auquel cas l'accélérateur primaire et l'accélérateur secondaire constituent les seuls accélérateurs de la composition de caoutchouc. La dénomination « un accélérateur primaire » désigne un seul accélérateur primaire ou un mélange d'accélérateurs primaires. De façon analogue, la dénomination « un accélérateur secondaire » désigne un seul accélérateur secondaire ou un mélange d'accélérateurs secondaires.

Lorsque l'accélérateur de vulcanisation est un mélange d'un accélérateur primaire et d'un accélérateur secondaire, l'accélérateur secondaire représente préférentiellement moins de 50% en masse de l'accélérateur de vulcanisation,

ce qui revient à dire que le ratio massique entre la quantité de l'accélérateur secondaire et la quantité de l'accélérateur de vulcanisation dans la composition de caoutchouc est préférentiellement inférieur à 0.5. Plus préférentiellement, le ratio massique entre la quantité de l'accélérateur secondaire et la quantité de l'accélérateur de vulcanisation dans la composition de caoutchouc est préférentiellement inférieur ou égal à 0.3.

Lorsque l'accélérateur de vulcanisation est un mélange d'un accélérateur primaire et d'un accélérateur secondaire, le ratio massique entre la quantité de l'accélérateur secondaire et la quantité de l'accélérateur de vulcanisation dans la composition de caoutchouc définie à l'une quelconque des revendications 1 à 15 est de préférence supérieur à 0.05, plus particulièrement compris entre 0.05 et 0.7.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires.

A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide.

A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

Lorsque l'accélérateur de vulcanisation est une sulfénamide, il est de préférence la N-cyclohexyl-2-benzothiazyle sulfénamide. Lorsque l'accélérateur de vulcanisation est un mélange d'un accélérateur primaire et d'un accélérateur secondaire, l'accélérateur de vulcanisation est de préférence un mélange d'une sulfénamide et d'un disufure de thiurame, particulièrement un mélange de N-cyclohexyl-2-benzothiazyle sulfénamide et d'un disulfure de thiurame, plus particulièrement un mélange de N-cyclohexyl-2-benzothiazyle sulfénamide et de disulfure de tétrabenzylthiurame.

Lorsque l'accélérateur de vulcanisation est un mélange d'une sulfénamide et d'un disulfure de thiurame, le ratio massique entre la quantité de l'accélérateur secondaire et la quantité de l'accélérateur de vulcanisation est préférentiellement inférieur à 0.5, plus préférentiellement inférieur ou égal à 0.3.

Lorsque l'accélérateur de vulcanisation est un mélange de N-cyclohexyl-2-benzothiazyle sulfénamide et d'un disulfure de thiurame, le ratio massique entre la quantité de l'accélérateur secondaire et la quantité de l'accélérateur de vulcanisation est préférentiellement inférieur à 0.5, plus préférentiellement inférieur ou égal à 0.3.

Lorsque l'accélérateur de vulcanisation est un mélange de N-cyclohexyl-2-benzothiazyle sulfénamide et de disulfure de tétrabenzylthiurame, le ratio massique entre la quantité de l'accélérateur secondaire et la quantité de l'accélérateur de vulcanisation est préférentiellement inférieur à 0.5, plus préférentiellement inférieur ou égal à 0.3.

Avantageusement il est utilisé à titre de soufre du soufre moléculaire et à titre d'accélérateur de vulcanisation une sufénamide comme la N-cyclohexyl-2-benzothiazyle sulfénamide ou un mélange d'une sulfénamide et d'un disulfure de thiurame, particulièrement un mélange de N-cyclohexyl-2-benzothiazyle sulfénamide et d'un disulfure de thiurame, plus particulièrement un mélange de N-cyclohexyl-2-benzothiazyle sulfénamide et de disulfure de tétrabenzylthiurame.

De préférence, le taux de soufre dans la composition de caoutchouc est inférieur à 0.95 pce, de préférence compris entre 0.3 pce et 0.95 pce. De manière encore plus préférentielle, le taux de soufre dans la composition de caoutchouc est inférieur à 0.8 pce, de préférence compris entre 0.3 pce et 0.8 pce. Ces plages préférentielles peuvent s'appliquer tout particulièrement lorsque le soufre est du soufre moléculaire. Ces plages préférentielles peuvent s'appliquer tout particulièrement lorsque l'accélérateur de vulcanisation est une sulfénamide comme la N-cyclohexyl-2-benzothiazyle sulfénamide ou un mélange d'une sulfénamide et d'un disulfure de thiurame tel qu'un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame Ces plages préférentielles peuvent s'appliquer tout particulièrement lorsque le soufre est du soufre moléculaire et lorsque l'accélérateur de vulcanisation est une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame.

Selon une première variante préférentielle, le rapport massique entre le taux de soufre et la quantité de l'accélérateur de vulcanisation est inférieur ou égal à 0.7. Cette première variante peut s'appliquer lorsque le soufre est du soufre moléculaire. Cette première variante peut s'appliquer lorsque l'accélérateur de vulcanisation est une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame. Cette première variante peut s'appliquer lorsque le soufre est du soufre moléculaire et lorsque l'accélérateur de vulcanisation est une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame.

Selon une deuxième variante plus préférentielle, le rapport massique entre le taux de soufre et la quantité de l'accélérateur de vulcanisation est inférieur à 0.6. Cette deuxième variante peut s'appliquer lorsque le soufre est du soufre moléculaire. Cette deuxième variante peut s'appliquer lorsque l'accélérateur de vulcanisation est une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame. Cette deuxième variante peut s'appliquer lorsque le soufre est du soufre moléculaire et lorsque l'accélérateur de vulcanisation est une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame.

De manière bien connue, le système de vulcanisation peut comprendre aussi des activateurs de vulcanisation comme des oxydes métalliques tels que l'oxyde de zinc ou des acides gras tels que l'acide stéarique.

La composition de caoutchouc utile aux besoins de l'invention a pour caractéristique essentielle de comprendre une charge renforçante. La charge renforçante peut comprendre tout type de charge connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante utile aux besoins de l'invention a pour caractéristique essentielle de comprendre un noir de carbone. Selon l'invention, le noir de carbone dans la composition de caoutchouc représente plus de 60% en masse de la charge renforçante ou autrement dit la charge renforçante comprend plus de 60% en masse de noir de carbone par rapport au poids total de charge renforçante. Selon l'invention, le taux de noir de carbone dans la composition de caoutchouc est entre 25 pce et 55 pce.

Selon un mode de réalisation particulier de l'invention, dit cinquième mode de réalisation, la charge renforçante comprend une silice. La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p/po* : 0.05 à 0.17). La surface spécifique CTAB est la surface externe déterminée selon la norme française NF T 45-007 de novembre 1987 (méthode B).

Pour coupler la silice à l'élastomère diénique fortement saturé, on peut utiliser de manière bien connue un agent de couplage (ou agent de liaison) au moins bifonctionnel destiné à assurer une connexion suffisante, de nature chimique et/ou physique, entre la silice (surface de ses particules) et l'élastomère. On utilise en particulier des organosilanes ou des polyorganosiloxanes au moins difonctionnels. Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik .

Selon le cinquième mode de réalisation de l'invention, le soufre est préférentiellement du soufre moléculaire. Selon le cinquième mode de réalisation de l'invention, l'accélérateur de vulcanisation est de préférence une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame. Selon le cinquième mode de réalisation de l'invention, le système de vulcanisation comprend plus préférentiellement à titre de soufre du soufre moléculaire et à titre d'accélérateur de vulcanisation une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame. Les variantes préférentielles du cinquième mode de réalisation peuvent être combinées avec l'un quelconque des modes de réalisation que sont le premier mode de réalisation, le deuxième mode de réalisation, le

troisième mode de réalisation et le quatrième mode de réalisation.

Selon un autre mode de réalisation de l'invention, dit sixième mode de réalisation, le noir de carbone représente plus de 85% en masse de la charge renforçante, de préférence 100% en masse de la charge renforçante. Lorsque le noir de carbone représente 100% en masse de la charge renforçante, la charge renforçante consiste en du noir de carbone.

Selon le sixième mode de réalisation de l'invention, le soufre est préférentiellement du soufre moléculaire. Selon le sixième mode de réalisation de l'invention, l'accélérateur de vulcanisation est de préférence une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame. Selon le sixième mode de réalisation de l'invention, le système de vulcanisation comprend plus préférentiellement à titre de soufre du soufre moléculaire et à titre d'accélérateur de vulcanisation une sulfénamide comme la N-cyclohexyl-2-benzothiazyle sulfénamide ou un mélange d'une sulfénamide et d'un disulfure de thiurame comme un mélange de N-cyclohexyl-2-benzothiazyle sulfénamide et d'un disulfure de thiurame ou un mélange de N-cyclohexyl-2-benzothiazyle sulfénamide et de disulfure de tétrabenzylthiurame.

Comme noirs de carbone conviennent tous les noirs de carbone, notamment les noirs conventionnellement utilisés dans les bandes de roulement pour pneumatique (noirs dits de grade pneumatique). Les noirs de carbone peuvent être utilisés à l'état isolé, tels que disponibles commercialement, ou sous tout autre forme, par exemple comme support de certains des additifs de caoutchouterie utilisés. On peut citer plus particulièrement les noirs de carbone renforçants des séries 100 et 200, 300, ou les noirs de série 500, 600 ou 700 (grades ASTM). Avantageusement, dans la composition de caoutchouc utile aux besoins de l'invention, en particulier définie à l'une quelconque des revendications 1 à 15, le noir de carbone est un noir de carbone des séries 100 ou 200.

La composition de caoutchouc utile aux besoins de l'invention peut comporter également tout ou partie des additifs usuels habituellement utilisés dans les compositions d'élastomères destinées à constituer des bandes de roulement comme par exemple des agents de mise en œuvre, des plastifiants, des pigments, des agents de protection tels que cires anti-ozone, anti-ozonants chimiques, anti-oxydants.

Selon un mode de réalisation de l'invention, dit septième mode de réalisation, la composition de caoutchouc utile aux besoins de l'invention, en particulier définie à l'une quelconque des revendications 1 à 15, est dépourvue de dérivé d'un diacrylate de zinc sous la forme d'un sel de zinc de formule (III) dans laquelle $R_1$, $R_2$ et $R_3$ représentent indépendamment les uns des autres un atome d'hydrogène ou un groupe hydrocarboné en $C_1$-$C_7$ choisi parmi les groupes alkyles linéaires, ramifiés ou cycliques, les groupes aralkyles, les groupes alkylaryles et les groupes aryles, et éventuellement interrompus par un ou plusieurs hétéroatomes, $R_2$ et $R_3$ pouvant former ensemble un cycle non aromatique. Le septième mode de réalisation peut être combiné avec l'un quelconque des modes de réalisation de l'invention que sont le premier mode de réalisation, le deuxième mode de réalisation, le troisième mode de réalisation, le quatrième mode de réalisation, le cinquième mode de réalisation et le sixième mode de réalisation, y compris leurs variantes préférentielles.

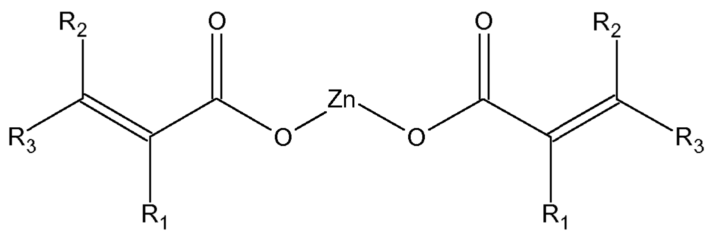

(III)

La composition de caoutchouc peut être fabriquée dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du soufre

et de l'accélérateur de vulcanisation. La durée totale du malaxage, dans cette phase non-productive, est de préférence comprise entre 1 et 15 min. Après refroidissement du mélange ainsi obtenu au cours de la première phase non-productive, on incorpore alors le soufre et l'accélérateur de vulcanisation à basse température, généralement dans un mélangeur externe tel qu'un mélangeur à cylindres; le tout est alors mélangé (phase productive) pendant quelques minutes, par exemple entre 2 et 15 min.

Selon un mode de réalisation, la composition de caoutchouc est extrudée pour former tout ou partie d'un profil d'une bande de roulement d'un pneumatique. Puis au cours de l'assemblage d'un pneumatique comprenant usuellement, radialement de l'extérieur vers l'intérieur, une bande de roulement, une armature de sommet et une armature de carcasse, la bande de roulement est posée radialement à l'extérieur de l'armature de sommet. Radialement signifie de manière connue dans une direction radiale par rapport à l'axe de rotation du pneumatique.

Le pneumatique peut être à l'état cru (c'est à dire avant l'étape de cuisson du pneumatique) ou à l'état cuit (c'est-à-dire après l'étape de cuisson du pneumatique). Le pneumatique est préférentiellement un pneumatique pour véhicule destiné à porter de lourdes charges comme par exemple les véhicules poids lourd, les véhicules de génie civil.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

### II.1 Tests et mesures :

#### II.1-1 Détermination de la microstructure des élastomères :

La microstructure des élastomères est déterminée par analyse RMN $^1H$, supplée par l'analyse RMN $^{13}C$ lorsque la résolution des spectres RMN du $^1H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

#### 11.1-2 Résistance mécanique en présence d'amorce de fissure (déchirabilité) :

La force et la déformation de déchirabilité sont mesurées sur une éprouvette étirée à 500 mm/min pour provoquer la rupture de l'éprouvette. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouvert dans le sens de la longueur d'un bourrelet de caoutchouc cylindrique (diamètre 5 mm) permettant l'ancrage dans les mors de la machine de traction. 3 entailles très fines de longueur comprise entre 15 et 20 mm sont réalisées à l'aide d'une lame de rasoir, à mi-largeur et alignées dans le sens

de la longueur de l'éprouvette, une à chaque extrémité et une au centre de l'éprouvette, avant le démarrage du test. On détermine la force (N/mm) à exercer pour obtenir la rupture et on mesure l'allongement à la rupture. Le test a été conduit à l'air, à une température de 100°C. Des valeurs élevées traduisent une bonne cohésion de la composition de caoutchouc bien que présentant des amorces de fissure.

11.1-3 Essais de traction :

Les essais d'allongement rupture (AR%) et de contrainte rupture (CR) sont basées sur la norme NF ISO 37 de Décembre 2005 sur une éprouvette haltère de type H2 et sont mesurés à une vitesse de traction de 500 mm/min. L'allongement rupture est exprimé en % d'allongement. La contrainte rupture est exprimée en MPa. Toutes ces mesures de traction sont effectuées à 60°C.

**II.2 Préparation des compositions de caoutchouc** :

Les compositions de caoutchouc dont le détail de la formulation figure dans le tableau 1, ont été préparées de la manière suivante :
On introduit dans un mélangeur interne (taux de remplissage final : environ 70% en volume), dont la température initiale de cuve est d'environ 80°C, successivement l'élastomère, la charge renforçante ainsi que les divers autres ingrédients à l'exception du soufre et de l'accélérateur de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore le soufre et l'accélérateur de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique.

L'élastomère (EBR) est préparé selon le mode opératoire suivant :
30 mg de métallocène $[\{Me_2SiFlu_2Nd(\mu\text{-}BH_4)_2Li(THF)\}_2$, le symbole Flu représentant le groupe fluorényle de formule $C_{13}H_8]$ sont introduits dans une première bouteille Steinie en boite à gant. Le co-catalyseur, le butyloctylmagnésium mis au préalable en solution dans 300 ml de méthylcyclohexane dans une seconde bouteille Steinie, est introduit dans la première bouteille Steinie contenant le métallocène dans les proportions suivantes 0.00007 mol/L de métallocène, 0.0004 mol/L de co-catalyseur. Après 10 minutes de contact à température ambiante est obtenue une solution catalytique. La solution catalytique est ensuite introduite dans le réacteur de polymérisation. La température dans le réacteur est alors augmentée à 80°C. Lorsque cette température est atteinte, la réaction démarre par injection d'un mélange gazeux d'éthylène et de 1,3-butadiène (80/20 % molaire) dans le réacteur. La réaction de polymérisation se déroule à une pression de 8 bars. Les proportions de métallocène et de co-catalyseur sont respectivement de 0.00007 mol/L et 0.0004 mol/L. La réaction de polymérisation est stoppée par refroidissement, dégazage du réacteur et ajout d'éthanol. Un anti-oxydant est ajouté à la solution de polymère. Le copolymère est récupéré par séchage en étuve sous vide.

**II.3 Résultats :**

Les résultats figurent dans le tableau 1.

Les compositions de caoutchouc conformes à l'invention C1, C4, C5, C6, C7, C8, C9, C10 pour lesquelles le taux de soufre est inférieur à 1 et le rapport massique entre le taux de soufre et la quantité de l'accélérateur de vulcanisation est inférieur à 1, présentent des allongements à la rupture bien supérieurs aux compositions de caoutchouc non conformes, C2 et C3. Les compositions conformes à l'invention C1, C4, C5, C6, C7, C8, C9, C10 s'avèrent bien plus résistantes mécaniquement et se montrent plus cohésives que les compositions C2 et C3, que ce soit en présence ou non d'amorce de fissure.

Ainsi, un pneumatique voit sa durée de vie amélioré s'il comporte une bande de roulement dont la portion destinée à être au contact avec le sol de roulage est constituée tout ou partie des compositions conformes à l'invention C1, C4, C5, C6, C7, C8, C9, C10 au lieu des compositions C2 et C3.

Tableau 1

| **Composition** | C1 | C2 | C3 | C4 | C5 | C6 | C7 | C8 | C9 | C10 |
|---|---|---|---|---|---|---|---|---|---|---|
| EBR (1) | 100 | 100 | 100 | 100 | 100 | 100 | 100 | 100 | 100 | 100 |
| Noir de carbone (2) | 40 | 40 | 40 | 40 | 40 | 40 | 40 | 40 | 40 | 40 |

(suite)

| Composition | C1 | C2 | C3 | C4 | C5 | C6 | C7 | C8 | C9 | C10 |
|---|---|---|---|---|---|---|---|---|---|---|
| Antioxydant (3) | 2 | 2 | 2 | 2 | 2 | 2 | 2 | 2 | 2 | 2 |
| Cire anti-ozone | 1 | 1 | 1 | 1 | 1 | 1 | 1 | 1 | 1 | 1 |
| Acide stéarique | 1.5 | 1.5 | 1.5 | 1.5 | 1.5 | 1.5 | 1.5 | 1.5 | 1.5 | 1.5 |
| ZnO | 2.5 | 2.5 | 2.5 | 2.5 | 2.5 | 2.5 | 2.5 | 2.5 | 2.5 | 2.5 |
| Accélérateur 1 (4) | 1.2 | 0.8 | 1.1 | 1.43 | 1.13 | 1.07 | 1.01 | 0.95 | 0.96 | 0.96 |
| Accélérateur 2 (5) | - | - | - | - | 0.13 | 0.19 | 0.25 | 0.31 | 0.10 | 0.15 |
| Soufre | 0.5 | 1.5 | 1.1 | 0.94 | 0.56 | 0.56 | 0.56 | 0.56 | 0.70 | 0.45 |
| Soufre/Accélérateur | 0.4 | 1.8 | 1 | 0.66 | 0.44 | 0.44 | 0.44 | 0.44 | 0.66 | 0.41 |
| **Propriétés à cuit** | | | | | | | | | | |
| Traction à 60°C<br>Allongement rupture (%)<br>Contrainte rupture (MPa) | <br>756<br>21 | <br>421<br>15 | <br>449<br>17 | <br>527<br>18 | <br>641<br>17 | <br>608<br>16 | <br>565<br>15 | <br>563<br>16 | <br>557<br>16 | <br>671<br>17 |
| Déchirabilité à 100°C<br>Allongement rupture(%)<br>Force rupture (N/mm) | <br>316<br>31 | <br>58<br>14 | <br>70<br>14 | <br>98<br>16 | <br>206<br>23 | <br>159<br>18 | <br>126<br>16 | <br>95<br>14 | <br>116<br>17 | <br>306<br>31 |

(1) Elastomère à 79% en mole d'unité éthylène, 7% en mole d'unité 1,2-cyclohexanediyle, 8% en mole de motif 1,2 de la partie butadiénique, 6% en mole de motif 1,4 de la partie butadiénique
(2) N234
(3) N-(1,3-diméthylbutyl)-N'-phényl-p-phenylènediamine ("Santoflex 6-PPD" société Flexsys)
(4) N-cyclohexyl-2-benzothiazol-sulfénamide (« Santocure CBS » de la société Flexsys)
(5) Disulfure de tétrabenzylthiurame ("Perkacit TBZTD" de la société Flexsys)

**Revendications**

1. Pneumatique qui comprend une bande de roulement dont la portion destinée à être au contact avec le sol de roulage est constituée tout ou partie d'une composition de caoutchouc à base au moins d'un élastomère diénique fortement saturé, d'une charge renforçante qui comprend un noir de carbone et d'un système de vulcanisation comprenant du soufre et un accélérateur de vulcanisation,

   - l'élastomère diénique fortement saturé étant un copolymère d'éthylène et d'un 1,3-diène contenant des unités éthylène qui représentent au moins 70% en mole des unités monomères du copolymère,
   - le taux de l'élastomère diénique fortement saturé dans la composition de caoutchouc étant d'au moins 80 pce,
   - le noir de carbone dans la composition de caoutchouc représentant plus de 60% en masse de la charge renforçante,
   - le taux de noir de carbone dans la composition de caoutchouc étant entre 25 pce et 55 pce,
   - le taux de soufre dans la composition de caoutchouc étant inférieur à 1 pce,
   - le rapport massique entre le taux de soufre et la quantité de l'accélérateur de vulcanisation dans la composition de caoutchouc étant inférieur à 1,
   - l'accélérateur de vulcanisation étant un accélérateur primaire ou un mélange d'un accélérateur primaire et d'un accélérateur secondaire,
   - le rapport massique étant calculé à partir des taux et quantité exprimés en pce.

2. Pneumatique selon la revendication 1 dans lequel l'élastomère diénique fortement saturé comprend de 75% à moins de 95% molaire d'unité éthylène, de préférence entre 75% et 90% molaire d'unité éthylène.

3. Pneumatique selon l'une quelconque des revendications 1 à 2 dans lequel le taux de l'élastomère diénique fortement saturé dans la composition de caoutchouc varie dans un domaine allant de 80 à 100 pce, de préférence de 90 à 100 pce.

**4.** Pneumatique selon l'une quelconque des revendications 1 à 3 dans lequel le 1,3-diène est le 1,3-butadiène.

**5.** Pneumatique selon l'une quelconque des revendications 1 à 4 dans lequel l'élastomère diénique fortement saturé contient des unités de formule (I) ou des unités de formule (II) ou encore des unités de formule (I) et de formule (II).

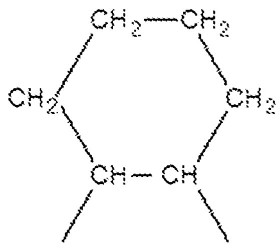

(I)

$-CH_2-CH(CH=CH_2)-$ (II)

**6.** Pneumatique selon l'une quelconque des revendications 1 à 5 dans lequel l'élastomère diénique fortement saturé est statistique.

**7.** Pneumatique selon l'une quelconque des revendications 5 à 6 dans lequel les pourcentages molaires des unités de formule (I) et des unités de formule (II) dans l'élastomère diénique fortement saturé, respectivement o et p, satisfont de préférence à l'équation suivante (eq. 1), de manière plus préférentielle à l'équation (eq. 2), o et p étant calculés sur la base de l'ensemble des unités monomères de l'élastomère diénique fortement saturé.

$$0 < o+p \leq 25 \qquad \text{(eq. 1)}$$

$$0 < o+p < 20 \qquad \text{(eq. 2)}$$

**8.** Pneumatique selon l'une quelconque des revendications 1 à 7 dans lequel le taux de soufre dans la composition de caoutchouc est inférieur à 0.95 pce, de préférence compris entre 0.3 pce et 0.95 pce.

**9.** Pneumatique selon l'une quelconque des revendications 1 à 8 dans lequel le taux de soufre dans la composition de caoutchouc est inférieur à 0.8 pce, de préférence compris entre 0.3 pce et 0.8 pce.

**10.** Pneumatique selon l'une quelconque des revendications 1 à 9 dans lequel le rapport massique entre le taux de soufre et la quantité de l'accélérateur de vulcanisation dans la composition de caoutchouc est inférieur ou égal à 0.7, de préférence inférieur à 0.6.

**11.** Pneumatique selon l'une quelconque des revendications 1 à 10 dans lequel l'accélérateur primaire est une sulfénamide, de préférence la N-cyclohexyl-2-benzothiazyle sulfénamide.

**12.** Pneumatique selon l'une quelconque des revendications 1 à 11 dans lequel l'accélérateur secondaire est un disulfure de thiurame, de préférence le disulfure de tétrabenzylthiurame.

**13.** Pneumatique selon l'une quelconque des revendications 1 à 12 dans lequel le ratio massique entre la quantité de l'accélérateur secondaire et la quantité de l'accélérateur de vulcanisation dans la composition de caoutchouc est inférieur à 0.5, préférentiellement inférieur ou égal à 0.3, le ratio massique étant calculé à partir des quantités exprimées en pce.

**14.** Pneumatique selon l'une quelconque des revendications 1 à 13 dans lequel la charge renforçante comprend une silice.

**15.** Pneumatique selon l'une quelconque des revendications 1 à 14 dans lequel le noir de carbone représente plus de 85% en masse de la charge renforçante, de préférence 100% en masse de la charge renforçante.

**Patentansprüche**

1. Reifen, der eine Lauffläche umfasst, deren zum Kontakt mit dem Fahruntergrund vorgesehener Abschnitt ganz oder teilweise aus einer Kautschukzusammensetzung auf der Basis mindestens eines stark gesättigten Dienelastomers, eines einen Ruß enthaltenden verstärkenden Füllstoffs und eines Schwefel und einen Vulkanisationsbeschleuniger umfassenden Vulkanisationssystems besteht, wobei

   - das stark gesättigte Dienelastomer ein Copolymer von Ethylen und einem Ethyleneinheiten enthaltenden 1,3-Dien ist, das mindestens 70 Mol-% der Monomereinheiten des Copolymers darstellt,
   - der Gehalt des stark gesättigten Dienelastomers in der Kautschukzusammensetzung mindestens 80 phr beträgt,
   - der Ruß in der Kautschukzusammensetzung mehr als 60 Gew.-% des verstärkenden Füllstoffs darstellt,
   - der Rußgehalt in der Kautschukzusammensetzung zwischen 25 phr und 55 phr beträgt,
   - der Schwefelgehalt in der Kautschukzusammensetzung weniger als 1 phr beträgt,
   - das Gewichtsverhältnis zwischen dem Schwefelgehalt und der Menge des Vulkanisationsbeschleunigers in der Kautschukzusammensetzung weniger als 1 beträgt,
   - der Vulkanisationsbeschleuniger ein Primärbeschleuniger oder eine Mischung eines Primärbeschleunigers und eines Sekundärbeschleunigers ist,
   - das Gewichtsverhältnis anhand des Gehalts und der Menge berechnet wird, die als phr ausgedrückt sind.

2. Reifen nach Anspruch 1, wobei das stark gesättigte Dienelastomer von 75 Mol-% bis weniger als 95 Mol-% Ethyleneinheiten, vorzugsweise zwischen 75 Mol-% und 90 Mol-% Ethyleneinheiten umfasst.

3. Reifen nach einem der Ansprüche 1 bis 2, wobei der Gehalt des stark gesättigten Dienelastomers in der Kautschukzusammensetzung in einem Bereich von 80 bis 100 phr, vorzugsweise von 90 bis 100 phr, variiert.

4. Reifen nach einem der Ansprüche 1 bis 3, wobei es sich beim 1,3-Dien um 1,3-Butadien handelt.

5. Reifen nach einem der Ansprüche 1 bis 4, wobei das stark gesättigte Dienelastomer Einheiten der Formel (I) oder Einheiten der Formel (II) oder sogar Einheiten der Formel (I) und Einheiten der Formel (II) enthält

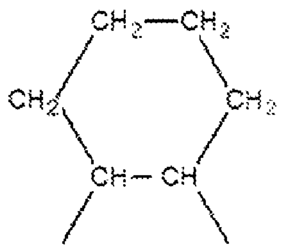

(I)

$$-CH_2-CH(CH=CH_2)- \quad (II)$$

6. Reifen nach einem der Ansprüche 1 bis 5, wobei das stark gesättigte Dienelastomer statistisch ist.

7. Reifen nach einem der Ansprüche 5 bis 6, wobei die Molprozente der Einheiten der Formel (I) bzw. der Einheiten der Formel (II) im stark gesättigten Dienelastomer, o bzw. p, vorzugsweise die folgende Gleichung (Gl. 1), auf bevorzugtere Weise die Gleichung (Gl. 2) erfüllen, wobei o und p auf der Grundlage der Gesamtheit der Monomereinheiten des stark gesättigten Dienelastomers berechnet werden

$$0 < o+p \leq 25 \quad (Gl.\ 1)$$

$$0 < o+p < 20 \quad (Gl.\ 2).$$

8. Reifen nach einem der Ansprüche 1 bis 7, wobei der Schwefelgehalt in der Kautschukzusammensetzung weniger als 0,95 phr, vorzugsweise zwischen 0,3 phr und 0,95 phr, beträgt.

9. Reifen nach einem der Ansprüche 1 bis 8, wobei der Schwefelgehalt in der Kautschukzusammensetzung weniger als 0,8 phr, vorzugsweise zwischen 0,3 phr und 0,8 phr, beträgt.

10. Reifen nach einem der Ansprüche 1 bis 9, wobei das Gewichtsverhältnis zwischen dem Schwefelgehalt und der Menge des Vulkanisationsbeschleunigers in der Kautschukzusammensetzung weniger als oder gleich 0,7, vorzugsweise weniger als 0,6, beträgt.

11. Reifen nach einem der Ansprüche 1 bis 10, wobei es sich beim Primärbeschleuniger um ein Sulfenamid, vorzugsweise N-Cyclohexyl-2-benzothiazylsulfenamid, handelt.

12. Reifen nach einem der Ansprüche 1 bis 11, wobei es sich beim Sekundärbeschleuniger um ein Thiuram, vorzugsweise Tetrabenzylthiuramdisulfid, handelt.

13. Reifen nach einem der Ansprüche 1 bis 12, wobei das Gewichtsverhältnis zwischen der Menge des Sekundärbeschleunigers und der Menge des Vulkanisationsbeschleunigers in der Kautschukzusammensetzung weniger als 0,5, vorzugsweise weniger als oder gleich 0,3, beträgt, wobei das Gewichtsverhältnis anhand der als phr ausgedrückten Mengen berechnet wird.

14. Reifen nach einem der Ansprüche 1 bis 13, wobei der verstärkende Füllstoff ein Siliciumdioxid umfasst.

15. Reifen nach einem der Ansprüche 1 bis 14, wobei der Ruß mehr als 85 Gew.-% des verstärkenden Füllstoffs, vorzugsweise 100 Gew.-% des verstärkenden Füllstoffs, darstellt.

## Claims

1. Tyre which comprises a tread, of which the portion intended to be in contact with the rolling ground consists totally or partly of a rubber composition based at least on a highly saturated diene elastomer, a reinforcing filler which comprises a carbon black and a vulcanizing system comprising sulfur and a vulcanization accelerator.

   - the highly saturated diene elastomer being a copolymer of ethylene and of a 1,3-diene containing ethylene units which represent at least 70 mol% of the monomer units of the copolymer,
   - the content of the highly saturated diene elastomer in the rubber composition being at least 80 phr,
   - the carbon black in the rubber composition representing more than 60% by mass of the reinforcing filler,
   - the content of carbon black in the rubber composition being between 25 phr and 55 phr,
   - the content of sulfur in the rubber composition being less than 1 phr,
   - the mass ratio between the sulfur content and the amount of vulcanization accelerator in the rubber composition being less than 1,
   - the vulcanization accelerator being a primary accelerator or a mixture of a primary accelerator and of a secondary accelerator,
   - the mass ratio being calculated from the contents and amount expressed in phr.

2. Tyre according to Claim 1, in which the highly saturated diene elastomer comprises from 75 mol% to less than 95 mol% of ethylene units, preferably between 75 mol% and 90 mol% of ethylene units.

3. Tyre according to either of Claims 1 and 2, in which the content of highly saturated diene elastomer in the rubber composition varies within a range extending from 80 to 100 phr, preferably from 90 to 100 phr.

4. Tyre according to any one of Claims 1 to 3, in which the 1,3-diene is 1,3-butadiene.

5. Tyre according to any one of Claims 1 to 4, in which the highly saturated diene elastomer contains units of formula (I) or units of formula (II), or else units of formula (I) and of formula (II).

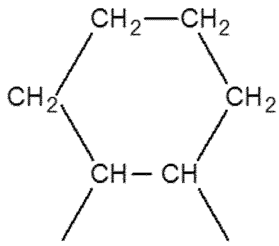

(I)

$-CH_2-CH(CH=CH_2)-$ (II)

**6.** Tyre according to any one of Claims 1 to 5, in which the highly saturated diene elastomer is statistical.

**7.** Tyre according to either of Claims 5 and 6, in which the molar percentages of the units of formula (I) and of the units of formula (II) in the highly saturated diene elastomer, o and p respectively, preferably satisfy the following equation (eq. 1), more preferentially the equation (eq. 2), o and p being calculated on the basis of all of the monomer units of the highly saturated diene elastomer

$$0 < o+p \leq 25 \qquad \text{(eq. 1)}$$

$$0 < o+p < 20 \qquad \text{(eq. 2)}$$

**8.** Tyre according to any one of Claims 1 to 7, in which the sulfur content in the rubber composition is less than 0.95 phr, preferably between 0.3 phr and 0.95 phr.

**9.** Tyre according to any one of Claims 1 to 8, in which the sulfur content in the rubber composition is less than 0.8 phr, preferably between 0.3 phr and 0.8 phr.

**10.** Tyre according to any one of Claims 1 to 9, in which the mass ratio between the sulfur content and the amount of vulcanization accelerator in the rubber composition is less than or equal to 0.7, preferably less than 0.6.

**11.** Tyre according to any one of Claims 1 to 10, in which the primary accelerator is a sulfenamide, preferably N-cyclohexyl-2-benzothiazylsulfenamide.

**12.** Tyre according to any one of Claims 1 to 11, in which the secondary accelerator is a thiuram disulfide, preferably tetrabenzylthiuram disulfide.

**13.** Tyre according to any one of Claims 1 to 12, in which the mass ratio between the amount of secondary accelerator and the amount of vulcanization accelerator in the rubber composition is less than 0.5, preferentially less than or equal to 0.3, the mass ratio being calculated from the amounts expressed in phr.

**14.** Tyre according to any one of Claims 1 to 13, in which the reinforcing filler comprises a silica.

**15.** Tyre according to any one of Claims 1 to 14, in which carbon black represents more than 85% by mass of the reinforcing filler, preferably 100% by mass of the reinforcing filler.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A1
- WO 2016012259 A1
- EP 1092731 A
- WO 2004035639 A
- WO 2007054223 A
- WO 2007054224 A
- WO 2017093654 A1
- WO 2018020122 A1
- WO 2018020123 A1
- WO 03016215 A1
- WO 03016387 A1


### Littérature non-brevet citée dans la description


- **BRUNAUER-EMMETT-TELLER.** *The Journal of the American Chemical Society,* 1938, vol. 60, 309